Europäisches Patentamt

European Patent Office

Office européen des brevets

(11) Publication number: **0 233 671**
**B1**

(12) **EUROPEAN PATENT SPECIFICATION**

(45) Date of publication of patent specification: **23.01.91**

(21) Application number: **87200174.8**

(22) Date of filing: **04.02.87**

(51) Int. Cl.⁵: **G 21 C 17/00, G 21 C 17/06**

(54) **A device for the measurement during operation of a dimension of an element or a stack of elements and/or its cladding.**

(30) Priority: **05.02.86 NL 8600273**

(43) Date of publication of application:
**26.08.87 Bulletin 87/35**

(45) Publication of the grant of the patent:
**23.01.91 Bulletin 91/04**

(84) Designated Contracting States:
**DE FR GB IT NL**

(56) References cited:
**EP-A-0 058 342**
**FR-A-2 093 476**
**FR-A-2 137 968**
**US-A-3 212 321**

**KERNTECHNIK, vol. 13, no. 10, October 1971, pages 454-457, Munich, DE; H.E. HÄFNER et al.: "Instrumentierte Brennstoffkriechkapsel" IDEM IDEM**

(73) Proprietor: **EUROPEAN ATOMIC ENERGY COMMUNITY (EURATOM)**
**Bâtiment Jean Monnet Plateau du Kirchberg**
**Boîte Postale 1907**
**L-2920 Luxembourg (LU)**

(72) Inventor: **Hale, Ronald Geoffrey**
**Weissenbruchstraat 7**
**NL-1816 KR Alkmaar (NL)**
Inventor: **Moss, Raymond Lloyd**
**Dawson Nes 15**
**NL-1862 AG Bergen (NH) (NL)**
Inventor: **Zeisser, Peter Rudolf**
**Helderseweg 89**
**NL-1817 BB Alkmaar (NL)**

(74) Representative: **Smulders, Theodorus A.H.J., Ir. et al**
**Vereenigde Octrooibureaux Nieuwe Parklaan 107**
**NL-2587 BP 's-Gravenhage (NL)**

# Description

A device for the measurement during operation of a dimension of an element or a stack of elements and/or its cladding.

This invention relates to a device for the measurement under operating conditions of a dimension of an element or a stack of elements and/or its cladding.

This invention particularly relates to the measurement under operating conditions of the length of a stack of fuel tablets and/or the cladding of a fuel rod formed by such a stack.

Fuel rods have long since been used in fast breeder reactors, but without any provision for monitoring the dimensions, in particular the length, of the stack of fuel tablets and/or the cladding of the fuel rod during operation. So far such data have been obtainable only after the irradiation of the fuel rods has been terminated and after the irradiation capsule has been dismantled, or by means of neutron radiography at intervals between the irradiation periods. However, the data obtained in these two cases relate to the cold fuel rod. The article "Instrument-equipped fuel creep capsule" by Häfner et al., Kenntechnik 1971, No. 10, pages 454-457; discloses an experimental rig for measurements of length variations of fuel specimens comprising a system of piston, bellows and differential transformers.

There are many problems which stand in the way of obtaining dimensional data from hot fuel rods under irradiation. These results principally from the fact that the rods are usually of completely sealed construction and that they are enclosed in a double-walled casing with a liquid metal filling. In addition, it is undesirable to situate a transducer for obtaining dimensional data close to the points of interest because of the adverse effects of nuclear radiation and the elevated temperatures on the accuracy of the transducer. These conditions further render it impossible to replace the transducer, if required.

On the other hand, the long-distance mechanical transmission of dimensional data to a transducer is undesirable because errors may then be introduced owing to thermal expansion of the components of such a mechanical system.

It is an object of the invention to provide a device with which the above problems can be overcome and with which information on the dimensions of the fuel rod in a capsule which is substantially equal to a conventional irradiation capsule with a fuel rod in a double casing can be transferred in a sufficiently accurate manner.

It is a further object of the invention to provide a device with which three different measurements can be selectively carried out at the fuel rod, namely, the measurement of the length of the stack-of fuel tablets; of the length of the cladding of the fuel rod, and of the difference between the length of the stack of fuel tablets and that of the cladding. The last mentioned measurement may be chosen for reasons of improved accuracy, or the results obtained by the two first mentioned measurements can be verified therewith. By means of the measurements it is possible, among other things, to study the effect of the fuel tablets on the cladding when the diameter of the fuel tablets increases. In fact, it is possible that the diameter of a fuel tablet in the stack increases to such a degree that this tablet gets jammed against the cladding. When the length of the stack of fuel tablets increases further, the cladding will be forced to follow this change of length, which may lead to rupture of the cladding, the more so as this embrittles under the influence of irradiation.

The invention provides a device for the measurement during operation of the length of an element or a stack of tablets, comprising a first casing on the bottom of which the element or stack of elements is placed, a first measuring rod one end of which is movably connected to the top of the first casing; a second casing surrounding the first casing and rigidly connected thereto, and a removable measuring unit connected to the second casing, said measuring unit being provided with a body having a central opening through which one end of a second measuring rod is passed into the second casing, a movable part of a displacement transducer being connected to the other end of the second measuring rod, and means being provided for longitudinally moving the first and the second measuring rod.

With such a device it is possible to determine the length of an element or a stack of elements, particularly fuel tablets, arranged within the first casing. Preferably, the first and second casings are gas-tight and the other end of the second measuring rod is surrounded by a third casing in likewise gas-tight condition, the second and third casings each communicating with a line for supplying a pressurized fluid, preferably a gas. The measuring rods may then be displaced by controlling the pressure of the fluid in the second and third casings.

The invention further provides a device of the above-described type in which a stop is formed in the first casing, said first casing communicating with a line for supplying a pressurized fluid, the first measuring rod being enlarged at the other end, which enlarged portion can cooperate with the bottom of the stop.

Such a device also enables measurement of the length of the first casing, particularly of the cladding disposed around a stack of fuel tablets in said first casing, in the latter case the stop being connected to the cladding.

Although the invention will hereinafter be discussed for use in carrying out measurements at fuel tablets in nuclear reactors, the invention is applicable wherever a dimension, particularly the length, of an element or stack of elements and/or a casing or cladding disposed around such elements is to be accurately determined under dangerous conditions. In case of application in nuclear reactors the pressurized fluid will be a gaseous medium, but for other applications the use of other fluids, such as liquids, is possible, and it is further possible to displace the first and the second measuring rod mechanically, e.g., by means of a motor or electromagnet.

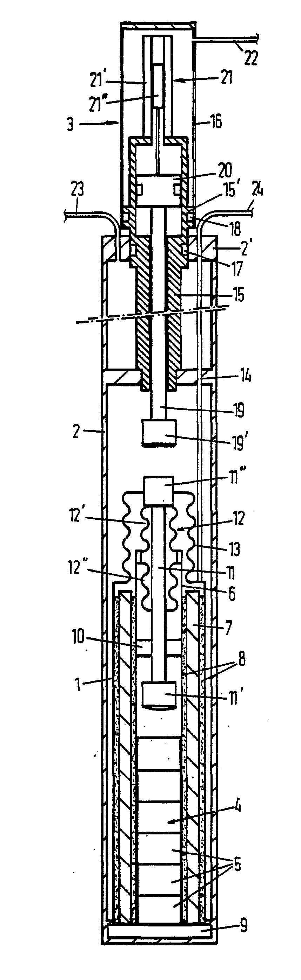

The invention will be elucidated herein below by means of an example of embodiment shown in the figure.

The figure shows a modified capsule for a fuel rod, comprising a first casing 1 and a second casing 2. The first casing comprises an inner covering and an outer covering. A measuring unit 3 is attached to the second casing.

A stack of fuel tablets 4 is placed within the first casing; by way of example six of such tablets 5 are shown in the figure, but in practice this number is very large. The stack 4 is surrounded by a cladding 6 forming the first covering. A cylinder 7 from molybdenum is disposed around the cladding 6, liquid metal 8 being arranged within the interspace between the cladding 6 and the cylinder 7 and between the cylinder 7 and the wall of the first casing 1. The wall of the first casing forms the second covering for the fuel tablets. The cylinder 7 from molybdenum and the liquid metal serve for transporting the heat developed in the fuel tablets.

The first casing 1 and the second casing 2 may have a common bottom which then forms a first plane of reference 9 in respect of which the measurement of the length of the stack 4 and the cladding 6 is effected. However, the first casing 1 may also be attached to a collar formed in the second casing, which collar then forms the plane of reference. Arranged within the cladding 6, at some distance above the fuel tablets 5, is a collar-shaped stop 10 connected to the cladding and provided with a central passageway for a measuring rod 11. The measuring rod 11 has an enlarged lower part 11' which may abut on the stop 10 when the measuring rod 11 is moved upwards. The measuring rod 11 is preferably made of titanium because this is a material having a low coefficient of expansion so that the change in length of the measuring rod continues to be small and does not adversely affect the measurements.

The measuring rod 11 is passed by means of two bellows 12 and 13, respectively, to the exterior of the inner casing. The first bellows 12 consists essentially of two series-connected bellows 12' and 12", said bellows 12', on the one hand, being attached to the cladding 6 and, on the other hand, to an enlarged upper part 11" of the measuring rod 11, and the bellows 12", on the one hand, likewise to the cladding and, on the other hand to the measuring rod 11. The bellows 12" may then be directed to the bottom of this measuring rod or like bellows 12' be connected to the enlarged end 11" thereof. The second bellows is, on the one hand, attached to the wall of the first casing 1 and, on the other hand, likewise attached to the top 11" of the measuring rod 11. There are provided two bellows 12' and 12" to ensure a superior and reliable sealing between the interior of the first covering of the first casing and the interior of the second covering thereof. In fact, it turns out in practice that the bellows sealing is most critical and is susceptible to failure. The top surface of the enlarged part 11" of the measuring rod 11 forms a stop for carrying out measurements by means of the measuring unit 3.

A second plane of reference is formed in the second casing 2 as a collar 14 extending into the interior of the casing. The bottom of the measuring unit 3 is mounted in a central opening of this collar 14.

The measuring unit 3 comprises a body 15 which is preferably made of titanium and is passed through a central opening in the upper surface 2' of the second casing 2 in gas-tight condition by means of a sealing ring 17. A third casing 16 is formed around the top of the body 15 in such a manner that there is a gas-tight sealing between the interior of the casing 16 and the surrounding space. This sealing consists of a collar 15' formed at the body 15, with a sealing ring 18 provided in a circumferential groove thereof.

A second measuring rod 19 is passed through a central opening in the body 15, said measuring rod having an enlarged lower part 19', the top of which is connected to a piston 20. This measuring rod is preferably also made of titanium. The piston 20 is provided with a circumferential groove having contained therein a sealing ring which sealingly abuts on the inner wall of a cylindrical space in the body 15 of the measuring unit, in such a manner that the piston can move up and down through this cylindrical part. The movable part 21" of a known per se displacement transducer 21 is connected to the top of the piston. The movable part 21" is surrounded by the fixed part 21' of the transducer, said fixed part being connected to the body 15 of the measuring unit. Finally, there are provided three gas supply lines 22, 23 and 24, respectively. The first gas supply line 22 communicates with the interior of the casing 16 of the measuring unit 3; the second gas supply line 23 with the interior of the second casing 2 and the third gas supply line 24 with the interior of the first casing 1. All of the three gas supply lines are connected to a gas source or gas sources not shown, with a possibility of separately controlling the pressure of the gas supplied to each line.

The device according to the figure enables measurement, in the manner described herein below, of first the length of the stack 4 of fuel tablets 5; second the length of the cladding 6 and third the difference between the length of the stack 4 and that of the cladding 6.

The measurement of the length of the stack 4 consisting of fuel tablets 5 is effected by making, via gas line 23, the gas pressure in the interior of the second casing so much higher than the gas pressure in the first casing that the measuring rod 11 with the enlarger lower part 11' thereof contacts the top of the uppermost fuel tablet 5 in the stack 4. When in a position of rest, the lower part 19' of the second measuring rod 19 abuts on the bottom of the second plane of reference 14, but when a gas pressure is supplied via line 22 to the interior of the casing 16 of the measuring unit, the piston 20 will move downwards under the influence of the gas pressure until the enlarged lower part 19' of the second measuring rod abuts on the enlarged upper part 11'' of the first measuring rod. Information on the length of the stack of fuel tablets can be derived from the difference of the output signal of the transducer 21 in a position of rest and in the position in which the bottom of the second measuring rod abuts on the top of the first measuring rod.

The length of the cladding 6 is in fact measured in the same way as described above with respect to the length of the stack of fuel tablets, with the exception of the fact that the gas pressure applied via line 24 to the first casing is higher than that prevailing in the second casing so that the measuring rod 11 will move upwards until the enlarged lower part 11' thereof contacts the collar-shaped stop 10 of the cladding. When subsequently the lower part 19' of the second measuring rod is moved from the rest position in which it abuts on the stop 14, by increasing the gas pressure in the third casing 16, until the part 19' abuts on the upper part of the measuring rod 11, information on the length of the cladding 6 can be derived from the signals of the transducer 21 in the rest position and in the position in which the measuring rods make contact.

Finally, it is possible to determine the difference between the length of the cladding and the length of the stack of fuel tablets by applying gas pressures to respectively the first casing, the second casing and the measuring unit in such a manner that the lower part 19' of the second measuring rod permanently abuts on the upper part 11'' of the first measuring rod, while this measuring rod moves over its measuring range from the stop 10 to the top of the uppermost fuel tablet 5.

Because during operation the part of the second casing between the first stop 9 and the second stop 14 is in permanent contact with cooling water from the reactor which, under operating conditions, has an average temperature of about 30°, the temperature gradient along the casing from the first stop to the second stop will be substantially constant, with the exception of small fluctuations occurring during the operating cycle of the reactor so that the position of the second plane of reference in regard to the first plane of reference can be determined with only a small margin of error. When the measurements are carried out, all information with respect to the length of the cladding and of the stack of fuel tablets is referred to the second plane of reference. When the resulting measuring values are analysed, these may be adjusted so as to determine the length in regard to the first plane of reference, that is to say, the bottom of the first casing.

The output signals of the transducer 21 are supplied to a remote reading unit in a manner known per se.

In the device according to the invention the measuring unit can be easily detached from the second casing or mounted in it again. This is particularly advantageous in an irradiation capsule, especially when this is for single use, because the measuring unit can then be used again and again. With conventional irradiation capsules having a closed construction a repair is usually not possible after the irradiation has started, owing to the radioactivity induced in the material of the capsule. In the device according to the invention, however, the measuring unit can be replaced after the irradiation has started.

Preferably, at least the lower part of the measuring unit which is most exposed to irradiation is made of titanium. A characteristic feature of this material is that the radioactivity induced therein soon becomes ineffective, and further that the material has a low coefficient of thermal expansion.

**Claims**

1. A device for the measurement during operation of the length of an element or a stack (4) of tablets (5), characterized by a first casing (1) on the bottom (9) of which the element (6) or stack of tablets can be placed, a first measuring rod (11) one end of which is movably connected (13) to the top of the first casing; a second casing (2) surrounding the first casing and rigidly connected thereto; and a removable measuring unit (3) connected to the second casing, said measuring unit being provided with a body (15) having a central opening through which one end of a second measuring rod (19) is passed into the second casing, a movable part (21'') of a displacement transducer (21) being connected to the other end of the second measuring rod, and means (22, 23, 24) being provided for longitudinally moving the first and the second measuring rod.

2. A device as claimed in claim 1, characterized in that the first (1) and the second (2) casing are fluid-tight, and that around the body of the measuring unit (3) a gas-tight third casing (16) is formed, in which casing a piston (20) attached to the other end of the second measuring rod (19) can be moved up and down, the movable part (21'') of the displacement transducer (21) being connected to the piston, and that lines (23, 22) for supplying a pressurized fluid are connected to respectively the second and the third casing.

3. A device as claimed in claim 1 or 2, characterized in that the second measuring rod (19) is substantially in line with the first measuring rod (11), and that the end of the second measuring rod extending into the second casing is enlarged and can cooperate with the bottom of a collar formed in the second casing.

4. A device as claimed in claim 2, characterized in that a stop (10) is formed in the first casing and a line for supplying a pressurized fluid is connected to the first casing, and that the other end (11') of the first measuring rod (11) is enlarged and can cooperate with the bottom of the stop.

5. A device as claimed in claim 2, 3 or 4, characterized in that the pressurized fluid is a gas.

6. A device as claimed in claim 4, characterized in that a cladding (6) is provided around the tablets and that the stop is formed at the cladding above the tablets.

7. A device as claimed in claim 4 or 6, characterized in that one end of a first double bellows (12', 12'') is always connected to the cladding, the other ends of which bellows are connected to the first measuring rod, and that one end of a second bellows (13) is connected to the wall of the first casing, the other end of said second bellows is connected to one end of the first measuring rod.

8. A device as claimed in at least one of the preceding claims, characterized in that the part of the measuring unit extending into the second casing and the second measuring rod are made of titanium.

9. A device as claimed in at least one of the preceding claims, characterized in that the first measuring rod is made of titanium.

## Patentansprüche

1. Anordnung für das Messen der Länge eines Elements oder einer Häufung (4) von Tabletten (5) während des Betriebes, gekennzeichnet durch ein erstes Gehäuse (1), auf dessen Boden (9) das Element (6) oder die Häufung von Tabletten abgesetzt werden kann, einen ersten Meßstab (11), dessen eines Ende mit dem oberen Ende (13) des ersten Gehäuses beweglich verbunden ist; ein zweites Gehäuse (2), das das erste Gehäuse umgibt und mit ihm starr verbunden ist; und eine mit dem zweiten Gehäuse verbundene entfernbare Meßeinheit (3), versehen mit einem Körper (15) mit einer zentralen Öffnung, durch die ein Ende eines zweiten Meßstabes (19) in das zweite Gehäuse hineingeführt ist, wobei ein beweglicher Teil (21'') eines Verschiebungstransduktors (21) mit dem anderen Ende des zweiten Meßstabes verbunden ist und Mittel (22, 23, 24) vorgesehen sind, den ersten und den zweiten Meßstab in Längsrichtung zu bewegen.

2. Vorrichtung nach Anspruch 1, dadurch gekennzeichnet, daß das erste (1) und das zweite (2) Gehäuse flüssigkeitsdicht sind und daß um den Körper der Meßeinheit (3) ein gasdichtes drittes Gehäuse (16) gebildet ist, in welchem Gehäuse ein am anderen Ende des zweiten Meßstabes (19) befestigter Kolben (20) auf und nieder bewegt werden kann, wobei der bewegliche Teil (21'') des Verschiebungstransduktors (21) mit dem Kolben verbunden ist und daß Leitungen (23, 22), durch die eine unter Druck stehende Flüssigkeit zugeführt wird, mit dem zweiten bzw. dem dritten Gehäuse verbunden sind.

3. Vorrichtung nach Anspruch 1 oder 2, dadurch gekennzeichnet, daß der zweite Meßstab (19) im wesentlichen mit dem ersten Meßstab (11) fluchtet und daß das Ende des in das zweite Gehäuse hineinragenden zweiten Meßstabes erweitert ist und mit dem Boden eines im zweiten Gehäuse gebildeten Kragens zusammenwirken kann.

4. Vorrichtung nach Anspruch 2, dadurch gekennzeichnet, daß ein Anschlag (10) im ersten Gehäuse gebildet ist und eine Leitung, durch die eine unter Druck stehende Flüssigkeit zugeführt wird, mit dem ersten Gehäuse verbunden ist und daß das andere Ende (11') des ersten Meßstabes (11) erweitert ist und mit dem Boden des Anschlags zusammenwirken kann.

5. Vorrichtung nach Anspruch 2, 3 oder 4, dadurch gekennzeichnet, daß die unter Druck stehende Flüssigkeit ein Gas ist.

6. Vorrichtung nach Anspruch 4, dadurch gekennzeichnet, daß eine Bekleidung (6) um die Tabletten angeordnet ist und daß der Anschlag an der Bekleidung oberhalb der Tabletten gebildet ist.

7. Vorrichtung nach Anspruch 4 oder 6, dadurch gekennzeichnet, daß das eine Ende eines ersten Doppelbalges (12', 12'') stets mit der Bekleidung verbunden ist, wobei die anderen Enden des Balges mit dem ersten Meßstab verbunden sind, und daß das eine Ende eines zweiten Balges (13) mit der Wand des ersten Gehäuses verbunden ist, wobei das andere Ende des zweiten Balges mit dem einen Ende des ersten Meßstabes verbunden ist.

8. Vorrichtung nach mindestens einem der vorhergehenden Ansprüche, dadurch gekennzeichnet, daß der Teil der in das zweite Gehäuse hineinragenden Meßeinheit und der zweite Meßstab aus Aluminium hergestellt sind.

9. Vorrichtung nach mindestens einem der vorhergehenden Ansprüche, dadurch gekennzeichnet, daß der erste Meßstab aus Aluminium hergestellt ist.

## Revendications

1. Dispositif de mesure de la dimension d'un élément ou d'une pile (4) de tablettes (5) en conditions de fonctionnement, caractérisé en ce qu'il présente une première enveloppe (1) sur le fond (9) de laquelle l'élément (6) ou la pile de tablettes peuvent être placés, une première jauge (11) dont une extrémité est reliée de manière mobile (13) au dessus de la première enveloppe; une deuxième enveloppe (2) entourant la première enveloppe est reliée rigidement à celle-ci; et un ensemble mobile de mesure (3) relié à la deuxième enveloppe, ledit ensemble de mesure mobile étant pourvu d'un corps (15) présentant une ouverture centrale à travers laquelle une extrémité d'une deuxième jauge (19) est passée dans la deuxième enveloppe, une partie mobile (21'') du capteur de déplacement (21) étant reliée à l'autre extrémité de la deuxième jauge, et des moyens (22, 23, 24) étant pourvus pour déplacer longitudinalement la première et la deuxième jauge.

2. Dispositif selon la revendication 1, caractérisé en ce que la première enveloppe (1) et la deuxième enveloppe (2) sont étanches au fluide, et en ce qu'autour du corps de l'ensemble de mesure (3) est formée une troisième enveloppe (16) étanche aux gaz, dans laquelle un piston (20) fixé à l'autre extrémité de la deuxième jauge (19) peut être déplacé vers le haut et vers le bas, la partie mobile (21'') du capteur de déplacement (21) étant reliée au piston, et en ce que des lignes (23, 22) pour l'alimentation d'un fluide sous pression sont reliées respectivement à la deuxième et à la troisième enveloppe.

3. Dispositif selon l'une des revendications 1 ou 2, caractérisé en ce que la deuxième jauge (19) est sensiblement alignée avec la première jauge (11), et en ce que l'extrémité de la deuxième jauge s'étendant à l'intérieur de la deuxième enveloppe est agrandie et peut coopérer avec le fond d'un collier formé dans la deuxième enveloppe.

4. Dispositif selon la revendication 2, caractérisé en ce qu'une butée (10) est formée dans la deuxième enveloppe et en ce qu'une ligne pour l'alimentation de fluide sous pression est reliée à la première enveloppe, et en ce que l'autre extrémité (11') de la première jauge (11) est agrandie et peut coopérer avec le fond de la butée.

5. Dispositif selon l'une des revendications 2, 3 ou 4, caractérisé en ce que le fluide sous pression est un gaz.

6. Dispositif selon la revendication 4, caractérisé en ce qu'un gainage (6) est prévu autour des éléments et en ce que la butée est formée à l'endroit du gainage au-dessus des éléments.

7. Dispositif selon l'une des revendications 4 ou 6, caractérisé en ce qu'une extrémité d'un premier double soufflet (12', 12'') est toujours reliée au gainage, les autres extrémités dudit soufflet étant reliées à la première jauge, et en ce qu'une extrémité d'un deuxième soufflet (13) est reliée à la paroi de la première enveloppe, l'autre extrémité dudit deuxième soufflet étant reliée à une extrémité de la première jauge.

8. Dispositif selon au moins une des revendications précédentes, caractérisé en ce que la partie de l'ensemble de mesure s'étendant à l'intérieur de la deuxième enveloppe et la deuxième jauge sont faits en titane.

9. Dispositif selon au moins une des revendications précédentes, caractérisé en ce que la première jauge est faite en titane.